# DEMANDE DE BREVET EUROPEEN

(11) **EP 0 971 520 A1**
(43) Date de publication de la demande: **12.01.2000**
(21) Numéro de dépôt: 99202099.0
(22) Date de dépôt: 29.06.1999
(51) Int. Cl.: H04M 1/02

(54) **Appareil électronique portable, son boîtier et son magasin de batterie**

(30) Priorité: 07.07.1998 FR 9808694
(71) Demandeur: Koninklijke Philips Electronics N.V., 5621 BA Eindhoven (NL)
(72) Inventeur: Guimier, Stéphane, 75008 Pais (FR); Jean, Pascal, 75008 Pais (FR)
(74) Mandataire: Pyronnet, Jacques

(57) **Abrégé**

L'appareil (1) à alimentation électrique par batterie (5) est constitué par un boîtier (2) avec circuits électroniques (3), un magasin de batterie séparable (4) et des moyens de connexion (8) entre circuits et batterie permettant la mise en place de deux batteries simultanément.

Selon l'invention, les moyens de connexion (8) constituent une interface distincte entre boîtier et magasin; des moyens d'enfichage (11) peuvent solidariser simultanément au moins deux magasins aux moyens de connexion et des moyens de pivotement (8) sont prévus sur le boîtier (2) pour permettre une rotation au moins sectorielle des moyens de connexion (8) et du(des) magasin(s) qui y est(sont) enfiché(s) par rapport au boîtier (2).

Application à un combiné de téléphone mobile.

## Description

La présente invention concerne un appareil électronique portable à alimentation électrique par batterie, constitué par un boîtier renfermant des circuits électroniques, un magasin de batterie séparable muni d'une batterie et des moyens de connexion pour relier électriquement lesdits circuits électroniques à ladite batterie, ces moyens étant conçus pour permettre la connexion simultanée d'au moins deux batteries.

L'invention s'applique à tout type d'appareil portable, de petite taille de préférence et consommant une puissance électrique faible. Il peut s'agir par exemple d'un lecteur de cassettes de bandes magnétiques du type baladeur, d'un petit récepteur radio, d'un ordinateur personnel portable ou avantageusement d'un appareil de radiocommunication portable, qu'il s'agisse d'un combiné de téléphone sans fil (ou résidentiel) ou d'un combiné de téléphone mobile (dit encore mobile ou téléphone cellulaire).

Pour de tels appareils électroniques, pour les appareils de radiocommunication portables, surtout, les batteries posent le problème d'une durée de vie limitée, d'une part parce que ces appareils sont de plus en plus miniaturisés et que la batterie l'est aussi dans des proportions comparables, et aussi parce que ces appareils continuent de consommer à l'état de veille, entre appels sortants, en vue de se localiser pour pouvoir recevoir un appel.

En pratique, les batteries ne sont pas utilisées à leur pleine capacité. Les utilisateurs ont tendance à remplacer la batterie avant qu'elle soit vide pour éviter qu'elle arrive en fin de décharge au cours d'une conversation. Par suite, le temps de fonctionnement effectif peut être inférieur à celui annoncé par le constructeur. Pour aggraver la chose, le fait de recharger les batteries d'un mobile avant leur décharge complète réduit leur durée de vie.

Si la batterie arrive en fin de charge au cours d'une conversation, le téléphone s'arrête de fonctionner. Pour poursuivre la conversation, l'utilisateur n'a pas d'autre choix que de remplacer la batterie, rallumer le téléphone, composer à nouveau son code, attendre l'enregistrement et composer à nouveau le numéro ou espérer que l'abonné distant rappelle. Cela provoque du retard, sinon la perte de communication avec l'interlocuteur, et selon le contrat passé avec l'opérateur le paiement éventuel d'une taxe pour un nouvel appel.

Pour résoudre ce problème technique deux types de solutions peuvent être envisagés: les solutions électroniques et les solutions électromécaniques. Les solutions purement électroniques impliquent une complication dans la programmation du réseau téléphonique et des combinés mobiles associés et, le plus souvent, elles ne peuvent s'affranchir d'une interruption de la conversation, de l'ordre de quelques secondes, ce qui est très gênant pour les interlocuteurs.

Les solutions électromécaniques qui consistent à permettre la connexion simultanée transitoire de deux batteries présentent l'avantage de ne pas interrompre la conversation téléphonique, l'appareil étant alimenté en permanence, et aussi de ne pas avoir à modifier les circuits électroniques ou leur programmation en prévision du changement de la batterie. Parmi ces solutions, est connue notamment celle de la demande de brevet japonais JP-A 08186515 selon laquelle le magasin de batterie comporte deux nervures latérales inférieures conductrices qui coopèrent avec deux rainures latérales arrière du boîtier du combiné, elles aussi conductrices. Le remplacement de la batterie usagée se fait par introduction d'une nouvelle batterie dans les rainures d'un côté du boîtier et coulissement, ce qui provoque l'expulsion de la batterie usagée du côté opposé, à mesure que la nouvelle batterie est mise en place contre le boîtier. Cette technique est simple mais elle implique une technologie difficile à mettre en oeuvre et donc chère, aussi bien pour le boîtier du combiné que pour les magasins de batterie.

L'invention a pour but la réalisation de moyens de connexion entre la batterie et les circuits électroniques d'un mobile qui permette la connexion simultanée de deux magasins, qui soit facile à mettre en oeuvre et donc économique, tout en étant fiable et résistant aux chocs.

Ce but est atteint et les inconvénients de l'art antérieur sont atténués grâce au fait que l'appareil électronique portable défini au premier paragraphe est remarquable en ce que lesdits moyens de connexion constituent une interface distincte entre ledit boîtier et ledit magasin, que des moyens d'enfichage sont prévus pour solidariser simultanément au moins deux magasins auxdits moyens de connexion et que des moyens de pivotement sont prévus sur ledit boîtier pour permettre une rotation au moins sectorielle desdits moyens de connexion et du(des) dit(s) magasin(s) qui y est(sont) enfiché(s) par rapport audit boîtier.

Selon un mode de réalisation préféré, l'appareil électronique portable selon l'invention est remarquable en ce que les moyens de connexion sont constitués par un barillet muni d'anneaux isolants et conducteurs alternés, monté à rotation contre une arête du boîtier, et qui coopère, par ses anneaux conducteurs, avec des contacts électriques glissants légèrement en saillie vers l'extérieur du boîtier et du (ou des) magasin(s).

De préférence, l'arête contre laquelle le barillet peut tourner est l'arête inférieure arrière du boîtier.

Lorsqu'une batterie est presque entièrement déchargée on peut la dégager du boîtier, même au cours d'une conversation, en la faisant tourner sectoriellement autour du barillet, puis enficher une autre batterie chargée dans le barillet, retirer la batterie déchargée et enfin rabattre la batterie chargée contre le boîtier selon une rotation inverse de la précédente. Pendant toutes ces opérations l'appareil sera resté en fonctionnement, étant alimenté en permanence, qu'il s'agisse de l'état de veille ou au cours d'un conversation, s'agissant d'un téléphone mobile.

Selon un autre mode de réalisation préféré, l'appareil électronique portable selon l'invention est remarquable en ce que lesdits moyens de connexion sont constitués par un corps cylindrique creux monté à rotation contre une arête dudit boîtier, muni d'une première ouverture longitudinale traversée par une nappe souple de conducteurs en provenance de l'intérieur dudit boîtier à travers une deuxième ouverture adéquate pratiquée en regard de la première dans celui-ci à l'endroit de ladite arête dudit boîtier et que ledit corps comporte intérieurement des pistes conductrices agencées circonférenciellement et munies chacune d'au moins deux contacts affleurants à l'endroit de trous destinés à recevoir à contact électrique des contacts affleurants de magasin et écartés angulairement d'un angle sensiblement inférieur à 90 degrés.

Ce deuxième mode de réalisation se distingue du premier par le fait qu'il ne met pas en oeuvre de contacts glissants. Pour ce qui est du changement de la batterie, dans ce cas, les manipulations sont tout à fait comparables à ce qui est décrit ci-dessus pour le premier mode de réalisation. On notera par ailleurs que le même magasin, comportant deux broches d'enfichage dans le barillet ou le corps cylindrique et typiquement quatre contacts affleurants peut être utilisé pour les deux modes de réalisation précités.

Le branchement simultané de deux batteries en parallèle pour l'alimentation d'un appareil électronique peut poser le problème technique annexe que la batterie chargée se décharge dans la batterie déchargée pendant tout le temps de branchement commun qui peut éventuellement durer plusieurs dizaines de secondes ou même plusieurs minutes. Pour éviter cette décharge intempestive on peut prévoir que chaque magasin de batterie comporte au moins une diode (dite anti-retour) pour empêcher la décharge d'une batterie dans une autre pendant le temps où deux magasins de batterie sont enfichés simultanément dans ledit appareil.

La description qui suit, en regard des dessins annexés, le tout donné à titre d'exemple non limitatif, fera bien comprendre comment l'invention peut être réalisée.

Les figures 1 à 6 représentent un premier mode de réalisation et les figures 7 à 9 un deuxième mode de réalisation de l'appareil électronique selon l'invention, en l'occurrence un combiné de téléphone mobile.
La figure 1 représente en perspective l'appareil vu de dos avec le magasin verrouillé contre le boîtier.
La figure 2 représente l'appareil de la figure 1 dont le magasin a été relevé par pivotement.
La figure 3 représente en perspective éclatée le boîtier, le magasin et le barillet de l'appareil de la figure 1.
La figure 4A est une vue de dessous en perspective du magasin et la figure 4B une vue en perspective de certains éléments séparés du barillet.
La figure 5 représente l'appareil de la figure 1 dans lequel deux magasins sont enfichés simultanément.
La figure 6 représente l'appareil de la figure 5 après pivotement des magasins contre le boîtier.
La figure 7 est une vue latérale en coupe du deuxième mode de réalisation de l'appareil muni de deux magasins dans une configuration d'ouverture.
La figure 8 est une vue latérale en coupe du deuxième mode de réalisation de l'appareil dans lequel la batterie déchargée a été enlevée et la nouvelle batterie chargée a été rabattue contre le boîtier.
La figure 9 est une vue en perspective selon deux positions du corps cylindrique creux que met en oeuvre le deuxième mode de réalisation.

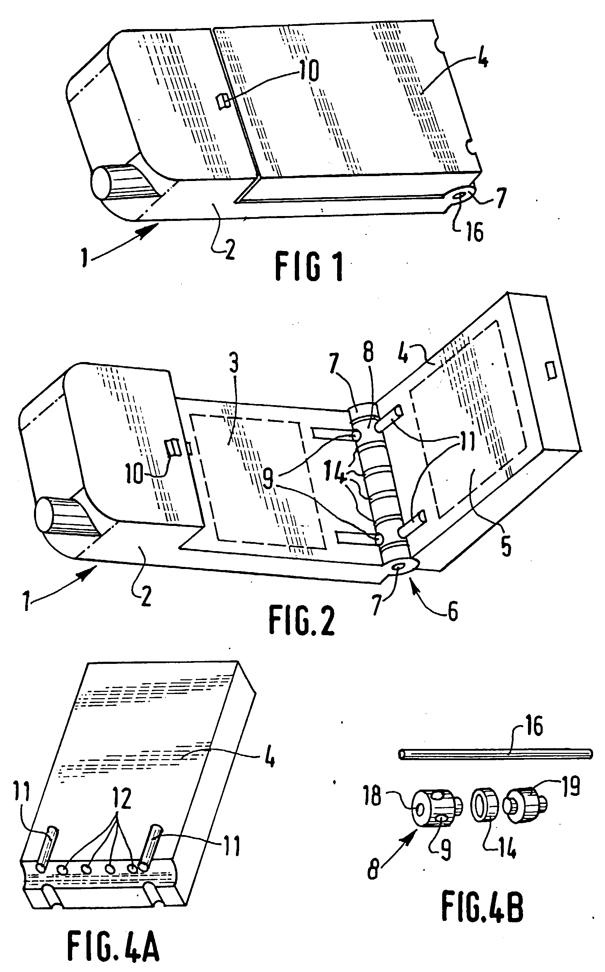

Le combiné de mobile 1 de la figure 1 comporte un boîtier 2 renfermant des circuits électroniques 3 (voir figure 2), et un magasin de batterie 4 contenant une batterie 5 (voir figure 2). Sur la figure 1 le magasin de batterie est maintenu en place contre le boîtier au moyen d'un verrou 10, de type connu.

A la figure 2 le magasin 4 a été déverrouillé et pivoté de 90° au niveau de l'arête inférieure arrière 6 du boîtier qui supporte à rotation dans des oreilles 7 un barillet 8 dans des trous 9 duquel le magasin 4 est ancré au moyen de goujons 11 qui constituent des moyens d'enfichage. On notera qu'à chacune parmi certaines cotes prédéterminées le long de son axe, le barillet comporte plusieurs trous 9, régulièrement espacés angulairement, de façon qu'il soit possible d'enficher plusieurs magasins simultanément et qu'alors plusieurs batteries alimentent l'appareil en même temps.

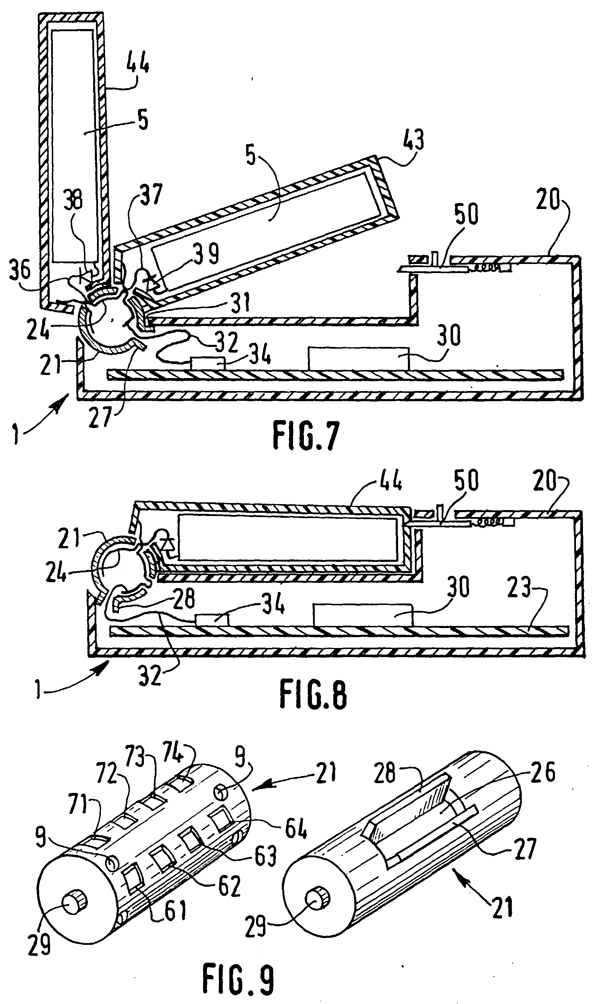

Sur les figures, les trous sont représentés espacés angulairement de 90 degrés et chaque magasin mis en place dans le barillet occupe d'ailleurs aussi un espace angulaire de 90 degrés. Cependant, cet angle sectoriel pourraît être plus faible, comme c'est le cas pour le deuxième mode de réalisation (figures 7 et 8), moyennant de biseauter la face inférieure du magasin, et pourraît être abaissé jusqu'à une valeur de l'ordre de 45 degrés. On notera qu'un angle encore plus faible que 45° pourraît rendre le barillet fragile et ne serait pas nécessaire étant donné qu'il suffit de pouvoir enficher et connecter simultanément deux magasins pour mettre en oeuvre l'invention.

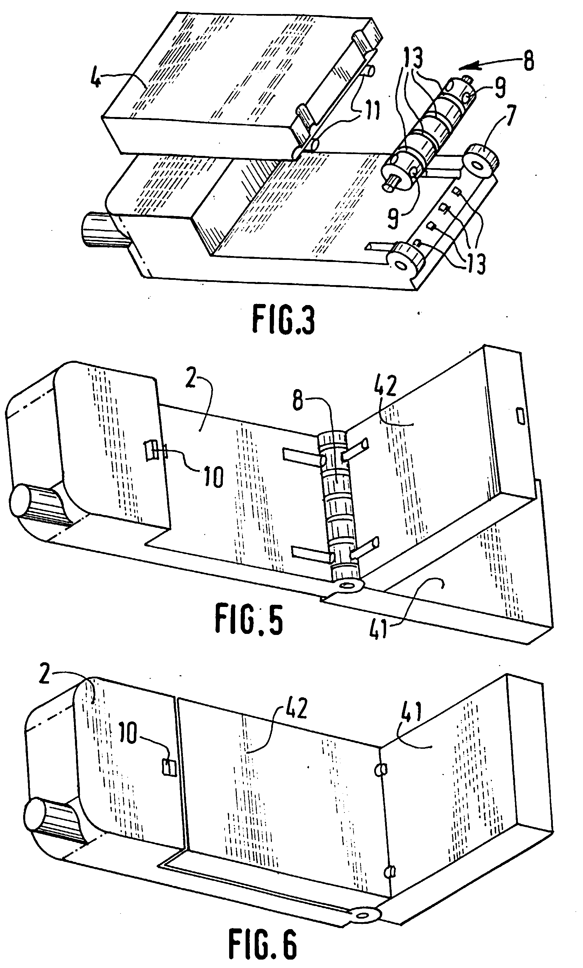

Les moyens de connexion entre la batterie 5 et les circuits électroniques 3 sont constitués par des contacts, typiquement 4, sous forme de lames élastiques affleurantes qui traversent et dépassent légèrement la surface externe des coques, référencés 12 dans le magasin (figure 4A) et 13 dans la coque (figure 3). Le barillet 8 sert de relais électromécanique, sous forme d'une interface distincte entre les contacts 12 et 13. Pour cela, des bagues (ou anneaux) conductrices 14, isolées entre elles sont à contact glissant chacune avec des contacts homologues 12 et 13.

Un exemple de réalisation du barillet 8 est représenté à la figure 4B : sur un axe 16 sont coulissés en alternance des anneaux isolants tels que 18, 19 et les bagues 14. Les bagues elles-mêmes sont supportées par les anneaux isolants, l'ensemble étant monté avec léger serrage et les extrémités de l'axe 16 étant supportées à rotation dans un trou central des oreilles circulaires 7. Les anneaux 18 et 19 peuvent être réalisés en un mélange Acrylate Butadiène Styrène-Polycarbonate (ABS-PC) comme les coques moulées du boîtier et des magasins. Les contacts 12 et 13 et les bagues 14 sont en un métal bon conducteur et non sujet à oxydation, d'un type connu dans le domaine de la téléphonie mobile.

Le remplacement d'une batterie déchargée 41 par une batterie chargée 42, sur avertissement d'un signal émis par le combiné, peut s'effectuer comme suit : le combiné étant dans la position de la figure 1, on l'ouvre jusqu'à la position de la figure 5, le magasin (41) ayant pivoté de 180 degrés. On insère ensuite grâce aux trous 9 dans le barillet 8 la nouvelle batterie chargée 42 angulairement en avant par rapport à la batterie 41. Puis on rabat l'ensemble des deux batteries en direction du boîtier jusqu'au verrouillage de la batterie 42 contre le boîtier au moyen du verrou 10 (figure 6); enfin on enlève la batterie 41. On notera qu'il est d'autres façons d'opérer qui procurent le même résultat, à savoir le maintien de l'alimentation électrique pendant l'échange des batteries : par exemple on enfiche une nouvelle batterie 42, angulairement en arrière par rapport à la batterie 4 (respectivement 41) supposée vide, dans le barillet de l'appareil représenté à la figure 1; puis on déverrouille et on fait pivoter l'ensemble des deux batteries de 15 à 20 degrés, suffisamment pour que la partie haute de la batterie 4 (41) dégage du boîtier; on extrait alors cette batterie (41) et on referme la nouvelle batterie (42) contre le boîtier.

Le deuxième mode de réalisation des figures 7 à 9 présente la particularité de ne pas mettre en jeu de contacts glissants contrairement au premier mode. En conséquence, alors que le barillet 8 du premier mode est libre en rotation, le corps cylindrique creux 21 qui le remplace, dans le deuxième mode est soumis à une rotation sectorielle, l'angle maximal de rotation étant de l'ordre de 90 degrés dans l'un ou l'autre sens.

Aux figures 7 et 8 le boîtier 20, muni d'un verrou 50 pour un magasin 43 (respectivement 44) et de circuits électroniques 30 sur une carte de circuit imprimé 23 comporte, selon l'invention, le corps cylindrique creux 21 qui constitue une interface distincte entre le boîtier 20 et le(les) magasin(s) 43, 44. Le corps 21 représenté à la figure 9 comporte d'un côté deux jeux de (typiquement) 4 ouvertures disposés chacun selon une génératrice, les ouvertures 61, 71 ; 62, 72 ; 63, 73 ; 64, 74 se correspondant deux à deux selon des plans perpendiculaires à l'axe du cylindre. Chaque trou laisse le passage à un contact électrique sous forme d'une lame élastique qui affleure la surface externe du cylindre. Chaque paire de contacts fait partie d'une piste conductrice intérieure circonférencielle telle que 24, (figures 7 et 8) et chaque contact d'une paire d'ouvertures (63, 73) est destiné à rencontrer un contact homologue parmi les contacts tels que 12 (voir figure 4A) d'un magasin de batterie. Les magasins 43 et 44 peuvent être presque identiques aux magasins 4, 41 et 42 du premier mode de réalisation; ils comportent des goujons 11 (non représentés) à introduire dans des trous 9 du corps creux (voir figure 9). Ils en diffèrent par le fait que leur face inférieure est légèrement biseautée et que leur emprise circonférencielle sur le corps creux 21 est seulement de l'ordre de 75 degrés. Du côté opposé à celui qui porte les ouvertures pour les contacts électriques le corps creux 21 présente une ouverture longitudinale 26 munie de deux lèvres longitudinales 27 et 28. Le corps creux 21 est mis en place par introduction des tourillons axiaux 29 dans les oreilles (non représentées) telles que 7 du boîtier (voir figure 1), de façon que les lèvres 27 et 28 fassent saillie à travers une ouverture 31 (non visible de façon explicite sur les figures) de longueur adaptée à l'ouverture 26. Ainsi les lèvres 27 et 28 constituent des butées contre les parois internes du boîtier 20 ne permettant au corps creux qu'un débattement angulaire de l'ordre de 90°. Lors du montage du corps creux les (4) pistes 24 sont rigidement mises en contact avec autant de conducteurs qui forment une nappe souple 32, laquelle passe entre les lèvres 27, 28 et est reliée aux plots de contact d'un connecteur 34 à l'intérieur du boîtier.

La figure 7 représente le boîtier 20 du mobile muni de deux magasins, le magasin 43 dont la pile est déchargée et qu'on vient de relever d'une quinzaine de degrés jusqu'à ce que la lèvre 28 vienne en butée contre le boîtier et le magasin 44 avec sa pile chargée, que l'on vient d'enficher dans le corps creux 21. Pour passer de la configuration de la figure 7 à la configuration de fonctionnement nominal de la figure 8, on a extrait le magasin 43 et rabattu le magasin 44 contre le boîtier 20 jusqu'a son verrouillage au moyen du verrou 50, position dans laquelle la lèvre 27 vient en butée contre le boîtier 20 à sa partie inférieure.

On notera, sur la figure 7 que l'un des conducteurs d'alimentation 36 (respectivement 37) en provenance de la batterie est muni d'une diode 38 (respectivement 39). Ceci correspond à une variante préférée de l'invention, d'ailleurs applicable aux deux modes de réalisation décrits, visant à empêcher que la batterie chargée (magasin 44) ne se décharge dans la batterie déchargée (magasin 43) pendant le temps où les deux batteries sont branchées simultanément. En l'occurrence, c'est la diode 39 qui réalise le blocage du courant de charge intempestif. La diode telle que 38 ou 39 peut se trouver sur le pôle positif (comme représenté) ou sur le pôle négatif (avec une polarisation inverse) de l'alimentation en courant et il est clair que le premier mode de réalisation des figures 1 à 6 peut mettre à profit ce perfectionnement du boîtier de batterie 4 (respectivement 41, 42).

L'invention ne se limite pas aux modes de réalisation décrits ci-dessus, plusieurs autres variantes qui ne sont pas toutes décrites étant à la portée de l'homme de l'art.

Notamment, pour les deux modes de réalisation décrits ci-dessus, l'articulation à rotation du magasin de batterie par rapport au boîtier pourrait se situer à une arête latérale arrière du boîtier au lieu de l'arête inférieure arrière et on pourrait même envisager de placer deux barillet ou deux corps creux, un sur chaque arête latérale arrière.

Pour ce qui est du premier mode de réalisation, le barillet peut aussi être réalisé d'une seule pièce cylindrique munie de tourillons à ses extrémités et autour de laquelle sont glissées les bagues conductrices 14.

Pour chacun des deux modes de réalisation décrits, il est aussi envisageable de combiner les propriétés de maintien et des propriétés électriques de contact des goujons 11, moyennant qu'il y ait autant de goujons métalliques ou métallisés que de contacts à réaliser (typiquement 4) et que les trous 9 faisant office de prise femelle soient aussi métallisés et reliés électriquement aux bagues 14 ou aux pistes 24.

## Revendications

1. Appareil électronique portable à alimentation électrique par batterie, constitué par un boîtier renfermant des circuits électroniques, un magasin de batterie séparable muni d'une batterie et des moyens de connexion pour relier électriquement lesdits circuits électroniques à ladite batterie, ces moyens étant conçus pour permettre la connexion simultanée d'au moins deux batteries, caractérisé en ce que lesdits moyens de connexion constituent une interface distincte entre ledit boîtier et ledit magasin, que des moyens d'enfichage sont prévus pour solidariser simultanément au moins deux magasins auxdits moyens de connexion et que des moyens de pivotement sont prévus sur ledit boîtier pour permettre une rotation au moins sectorielle desdits moyens de connexion et du(des) dit(s) magasin(s) qui y est(sont) enfiché(s) par rapport audit boîtier.

2. Appareil électronique portable selon la revendication 1 constitué par un appareil de radiocommunication portable ou mobile.

3. Appareil électronique portable selon la revendication 1 ou 2, caractérisé en ce que les moyens de connexion sont constitués par un barillet muni d'anneaux isolants et conducteurs alternés, monté à rotation contre une arête du boîtier, et qui coopère, par ses anneaux conducteurs, avec des contacts électriques glissants légèrement en saillie vers l'extérieur du boîtier et du (ou des) magasin(s).

4. Appareil électronique portable selon la revendication 1 ou 2, caractérisé en ce que lesdits moyens de connexion sont constitués par un corps cylindrique creux monté à rotation contre une arête dudit boîtier, muni d'une première ouverture longitudinale traversée par une nappe souple de conducteurs en provenance de l'intérieur dudit boîtier à travers une deuxième ouverture adéquate pratiquée en regard de la première dans celui-ci à l'endroit de ladite arête dudit boîtier et que ledit corps comporte intérieurement des pistes conductrices agencées circonférenciellement et munies chacune d'au moins deux contacts affleurants à l'endroit de trous destinés à recevoir à contact électrique des contacts affleurants de magasin et écartés angulairement d'un angle sensiblement inférieur à 90 degrés.

5. Appareil électronique portable selon la revendication 4, caractérisé en ce que ladite première ouverture est munie de lèvres qui pénètrent dans ladite deuxième ouverture et qui servent de butées intérieurement contre des parois dudit boîtier.

6. Appareil électronique portable selon l'une des revendications 1 à 5, caractérisé en ce que ladite arête est l'arête inférieure arrière dudit boîtier.

7. Appareil électronique portable selon l'une des revendications 1 à 6, caractérisé en ce que chaque magasin de batterie comporte au moins une diode, pour empêcher la décharge d'une batterie dans une autre pendant le temps où deux magasins de batterie sont enfichés simultanément dans ledit appareil.

8. Magasin de batterie destiné à un appareil électronique portable selon l'une des revendications 1 à 7, caractérisé en ce qu'il comporte des moyens d'enfichage pour solidariser ledit magasin auxdits moyens de connexion conçus pour permettre la connexion électrique à rotation dudit magasin audit boîtier.

9. Boîtier destiné à un appareil électronique portable selon l'une des revendications 1 à 7, caractérisé en ce qu'il comporte, montés à pivotement, lesdits moyens de connexion conçus pour permettre la connexion électrique à rotation dudit magasin audit boîtier, et que lesdits moyens de connexion sont munis de trous pour recevoir lesdits moyens d'enfichage dudit magasin de batterie.
